# EUROPÄISCHE PATENTSCHRIFT

(11) **EP 0 733 391 B1**
(45) Veröffentlichungstag und Bekanntmachung des Hinweises auf die Patenterteilung: **11.07.2001**
(21) Anmeldenummer: 96104439.3
(22) Anmeldetag: 20.03.1996
(51) Int. Cl.: B01D 33/04, B01D 29/09

(54) **Bandfilter**
Beltfilter
Filtre à bande

(30) Priorität: 24.03.1995 DE 19510924
(43) Veröffentlichungstag der Anmeldung: 25.09.1996
(73) Patentinhaber: BHS-Sonthofen Maschinen- und Anlagenbau GmbH, 87527 Sonthofen (DE)
(72) Erfinder: Schmid, Hans-Peter, Dipl.-Ing. (FH), 87545 Burgberg (DE)
(74) Vertreter: Herzog, Markus, Dipl.-Phys. Dr.

(56) Entgegenhaltungen:
- DE-A- 4 242 752
- DE-B- 1 925 673
- FR-A- 2 313 963
- GB-A- 1 368 464

## Beschreibung

Bei einer Horizontalbandfiltervorrichtung mit bewegtem Filterband wird die Filterwanne so ausgebildet, daß für den Filterkuchen eine Wanne mit geraden Seitenwänden entsteht und der Filterkuchen einen im wesentlichen rechteckigen Querschnitt annimmt. Die Unterseite des Filterkuchens liegt auf dem porösen Filtertuch, die Seiten liegen in den bevorzugten Ausführungen an den undurchlässigen, geraden Seitenwänden und die Oberseite des Filterkuchens hat im wesentlichen die gleichen Maße wie die Unterseite. Damit sind Filterkuchenbehandlungen nach der Filtration durch Waschen, Trockensaugen, Trocknen, Pressen und sonstige Prozesse möglich, ohne daß die sonst üblichen Störungen durch Randeinflüsse an den Seiten auftreten.

Die Erfindung betrifft eine Filtervorrichtung mit einem Filterband, auch Filtertuch genannt, und das Filterband führenden Führungsmitteln zur Schaffung eines im wesentlichen horizontalen, ebenen, oberen Laufs, Saugkästen in diesem oberen Lauf unter dem Filterband, Zuführeinrichtungen für Suspension über diesen Kästen und Nachbehandlungsmöglichkeiten für den durch Saugen gebildeten Filterkuchen auf dem oberen Lauf. Das Filterband wird durch geeignete Führungen von diesem Lauf abgeführt. Das Filterband wird kontinuierlich oder alternierend und fortschreitend bewegt und durchläuft so mehrere unterschiedliche Zonen des oberen Laufs, z. B. Filtrationszonen zum Abzug der Flüssigkeit aus der Suspension und Bildung eines Filterkuchens, Waschzonen zum Durchsaugen von Waschflüssigkeit durch diesen Filterkuchen und anderen Zonen zur weiteren Behandlung des Filterkuchens. Der obere Lauf des Filterbandes liegt in Filterschalen aus Metall, Kunststoff oder sonstwie geeigneten Konstruktionsmitteln und bildet eine Unterstützung für dieses Filterband. Diese Filterschalen sind fest oder oszillieren, während das Filtertuch kontinuierlich oder alternierend und fortschreitend über diese Filterschalen bewegt wird und auf seiner fortschreitenden Bewegung den in der Filterzone durch Flüssigkeitsabzug erzeugten Filterkuchen über den oberen Lauf transportiert.

Filter dieser Art sind bekannt, z. B. aus der DE 43 03 292 und aus der DE 26 20 627.

Solche Filter werden bevorzugt eingesetzt zum Abscheiden von Feststoffen aus Suspensionen und zur nachfolgenden Auswaschung dieser Feststoffe durch Waschflüssigkeiten, zum Auspressen des Filterkuchens durch Preßeinrichtungen, zum Entfeuchten des Filterkuchens durch Trockensaugen, indem Luft oder Gas durch den Filterkuchen gesaugt wird, zum Trocknen des Filterkuchens durch Einbringung von Wärme auf verschiedenen Wegen und sonstige Nachbehandlungen des Filterkuchens, der zum Zwecke dieser Behandlungen mittels des Filterbandes von einer Behandlungsstation zur anderen transportiert wird.

Nachteil dieser Methode ist der Filterkuchenrand. Dieser ist nämlich stets in Form eine Zwickels ausgebildet. Aus Gründen der mechanischen Stabilität werden die verwendeten Filterbänder so in den erwähnten Filterschalen geführt, daß diese Schalen in Form einer Wanne ausgebildet sind, die schräge Seitenwände hat. Durch diese Schrägung gelingt ein Anlegen des Filterbandes an die Seitenwand. Dagegen würde das Filterband von senkrecht hochstehenden Seitenwänden der besprochenen Filterschalen abrutschen, Falten bilden und so einen störungsfreien Betrieb verhindern.

Diese beschriebene Ausbildung des Filterkuchens ist nachteilig. Es ist oben eine viel größere Fläche Filterkuchen als auf der unteren, dem Filtertuch zugewandten Seite, so daß sich am Rand des Filterkuchens ein Zwickel bildet, der beim Auswaschen, Pressen, Trockensaugen und sonstigen Nachbehandlungen des Filterkuchens von der Nachbehandlung nicht vollständig oder ungleichmäßig erfaßt wird. Beide erwähnten Patentschriften zeigen deutlich diese Situation mit den vorbeschriebenen Nachteilen.

Die Erfindungsaufgabe besteht also darin, den Filterkuchen so auszubilden, daß Ober- und Unterseite gleiche Abmessungen haben und daß das Filtertuch auf schrägen Wänden geführt werden kann.

Erfindungsgemäß wird die Filterschale 10 in Form der üblichen Wannen mit schrägen Seitenwänden gebaut. Darin läuft in an sich bekannter Weise das Filterband 20. Es sind nunmehr erfindungsgemäß Füllstücke 40 so in die Filterschalen eingebaut, daß für den Filterkuchen 30 eine gerade Seitenwand 42 entsteht, während das Filterband 20 mit seinem Seitenrand in einem Schlitz 44 des Füllstückes 40 geführt wird. Die Füllstücke können so bemessen sein, daß sie mit ihrer Seitenwand 42 direkt oberhalb der Filterschalenkante 22 enden oder daß diese Seitenwand 42 gegenüber der Filterschalenkante 22 um ein geringes Maß versetzt ist. Der Filterkuchen 30 liegt nunmehr im wesentlichen in Form eines Quaders mit rechteckigem Querschnitt vor und nicht wie bei allen bisher bekannten Filtern des eingangs beschriebenen Typs in einer trapezförmigen Querschnittsform. Der ursprüngliche Zwickel 46 des Filterkuchens 30 wird also durch das Füllstück 40 ausgefüllt. Dabei ist diese wesentliche Verbesserung einfach und kostengünstig herzustellen und anzubringen.

Nunmehr können die bekannten Nachbearbeitungen des Filterkuchens auf den beschriebenen Filtern durchgeführt werden, ohne daß an dem Zwickel 46 eine wesentliche Beeinträchtigung der Prozesse durch Randeinflüsse stattfindet und ohne daß das Filtertuch 20 sich in unerwünschte Falten legt.

In Abwandlung des gezeigten bevorzugten Ausführungsfalles kann das Filtertuch 20, wenn es ausreichende Stabilität gegen Faltenbildung aufweist, natürlich auch nicht in den Schlitzen 44 geführt werden, sondern senkrecht aufgestellt und entlang der Seitenwände 42 der Füllstücke 40 geführt werden.

Im gezeigten Ausführungsbeispiel ist ein Preßstempel 50 gezeigt, der zwischen den beiden Seitenwänden 42 der Füllstücke 40 geführt ist, wobei der Zwischenraum 48 zwischen dem Preßstempel 50 und den Seitenwänden 42 sehr klein sein kann. Dieser Preßstempel kann nunmehr den Filterkuchen 30 gleichmäßig pressen, gleichgültig wie hoch der anfiltrierte Kuchen ist. Es ist ja leicht ersichtlich, daß bei deutlich höheren Filterkuchenstärken der Zwickel 46 immer größer wird und so der unbeeinflußte Rand des Filterkuchens immer mehr zunimmt, wenn auf die hier beschriebene Erfindung verzichtet wird.

Vorteilhafterweise können nunmehr auch wesentlich höhere Filterkuchendicken erzeugt werden als bisher. Durch dichte Auflage der Füllstücke 40 an der Filterschale 10 an der Kontaktstelle 12 kann die zur Filtration bzw. Füllung mit Suspension nutzbare Filterschalenhöhe problemlos vergrößert werden. Durch diese größere einbringbare Suspensionsmenge ist aber auch ein wesentlich höherer Filterkuchen 30 zu erzeugen. Weiter oben ist beschrieben, daß dieser hohe Filterkuchen nach der erfindungsgemäßen Ausbildung der Filterschalen gleichmäßig gewaschen, trockengesaugt oder getrocknet werden kann, weil der ebenfalls oben beschriebene Randeinfluß am Zwickel 46 entfällt.

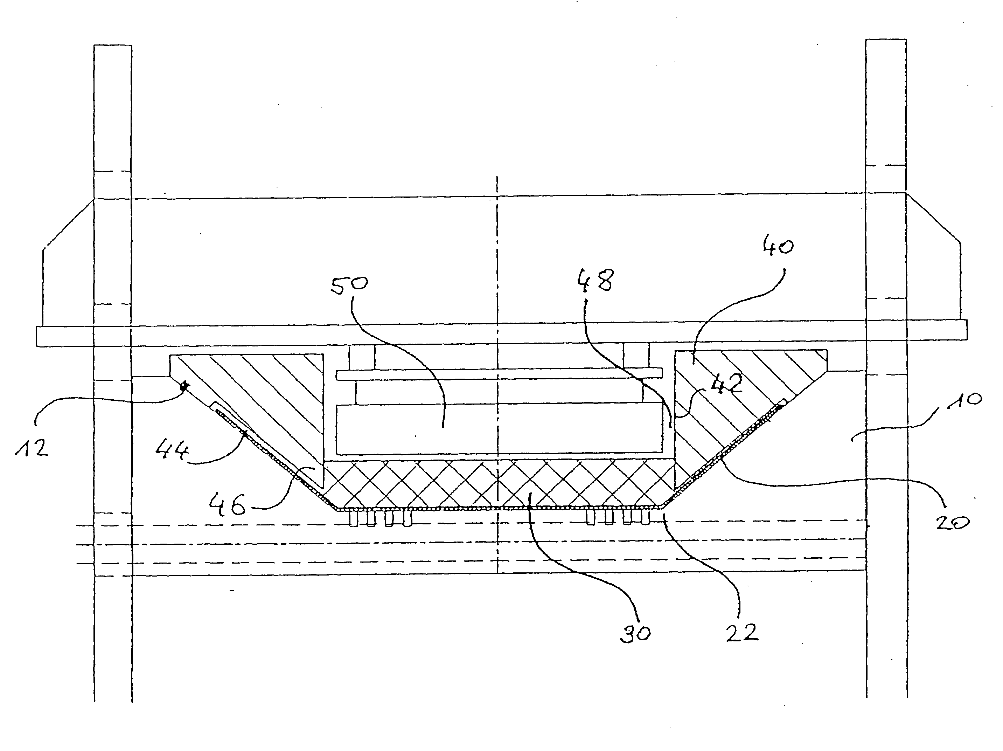

## Patentansprüche

1. Filtervorrichtung, umfassend eine Filterschale (10), ein Filterband (20), das in einem im wesentlichen horizontalen Lauf durch das Filter geführt wird, sowie Behandlungsstationen entlang dieses Laufes zum Behandeln des Filterkuchens durch Auswaschung, Pressen, Trockensaugen, thermisches Trocknen oder sonstige Prozeßschritte,
dadurch gekennzeichnet, daß die Seitenwände der Filterschalen (10) mit Füllstückken (40) versehen werden, so daß für den gebildeten Filterkuchen (30) ein im wesentlichen rechteckiger Querschnitt zur Verfügung steht.

2. Vorrichtung nach Anspruch 1,
dadurch gekennzeichnet,
daß die Füllstücke (40) mit Schlitzen (44) versehen werden.

3. Vorrichtung nach Anspruch 1 oder 2,
dadurch gekennzeichnet,
daß das Filterband (20) durch die beschriebenen Schlitze (44) geführt wird.

4. Vorrichtung nach einem der Ansprüche 1 - 3,
dadurch gekennzeichnet,
daß die Füllstücke (40) mit den Filterschalen (10) an den Berührungsstellen (12) dicht verbunden sind.

5. Vorrichtung nach einem der Ansprüche 1 - 4,
dadurch gekennzeichnet,
daß die Füllstücke (40) mit ihrer Seitenfläche (42) im wesentlichen mit der Kante (22) der Filterwannen (10) fluchten.

6. Vorrichtung nach einem der Ansprüche 1 - 5,
dadurch gekennzeichnet,
daß die Füllstücke (40) mit ihrer Seitenfläche (42) zur Kante (22) der Filterwannen (10) um ein geringes Maß versetzt sind.

7. Vorrichtung nach einem der Ansprüche 1 - 6,
dadurch gekennzeichnet,
daß die Füllstücke (40) weit über die Filterschalenoberkante (10) ragen.

## Claims

1. Filter device, comprising a filter tray (10), a filter belt (20) which is guided in a substantially horizontal course through the filter and treatment stations along this course for treating the filter cake by rinsing, compressing, sucking dry, thermal drying or other processing stages, characterised in that the side walls of the filter trays (10) are provided with filling pieces (40), so a substantially rectangular cross-section is available for the filter cake (30) formed.

2. Device according to claim 1, characterised in that the filling pieces (40) are provided with slots (44).

3. Device according to claim 1 or 2, characterised in that the filter belt (20) is guided through the described slots (44).

4. Device according to any of claims 1 to 3, characterised in that the filling pieces (40) are tightly connected to the filter trays (10) at the contact points (12).

5. Device according to one of claims 1 to 4, characterised in that the filling pieces (40) with their side face (42) are substantially flush with the edge (22) of the filter tanks (10).

6. Device according to any of claims 1 to 5, characterised in that the filling pieces (40) with their side face (42) are slightly offset from the edge of the filter tanks (10).

7. Device according to any of claims 1 to 6, characterised in that the filling pieces (40) project a long way over the upper edge of the filter trays (10).

## Revendications

1. Dispositif de filtrage, comprenant une capsule à filtrer (10), une bande de filtre (20) qui est guidée à travers le filtre suivant un parcours sensiblement horizontal, ainsi que des postes de traitement, situés le long de ce parcours, destinés à traiter le gâteau de filtrage par lavage, pressage, séchage par aspiration, séchage thermique ou autres étapes de procédé,
caractérisé en ce que
les parois latérales des capsules à filtrer (10) sont pourvues d'éléments de remplissage (40), afin de disposer, pour le gâteau de filtrage (30) formé, d'une section transversale sensiblement rectangulaire.

2. Dispositif selon la revendication 1,
caractérisé en ce que les éléments de remplissage (40) sont pourvus de fentes (44).

3. Dispositif selon la revendication 1 ou 2,
caractérisé en ce que la bande de filtre (20) est guidée à travers les fentes (44) mentionnées.

4. Dispositif selon l'une des revendications 1 - 3,
caractérisé en ce que les éléments de remplissage (40) sont reliés de façon étanche aux capsules à filtrer (10) au niveau des points de contact (12).

5. Dispositif selon l'une des revendications 1 - 4,
caractérisé en ce que la surface latérale (42) des éléments de remplissage (40) est sensiblement alignée avec l'arête (22) des capsules à filtrer (10).

6. Dispositif selon l'une des revendications 1 - 5,
caractérisé en ce que la surface latérale (42) des éléments de remplissage (40) est légèrement décalée par rapport à l'arête (22) des capsules à filtrer (10).

7. Dispositif selon l'une des revendications 1 - 6,
caractérisé en ce que les éléments de remplissage (40) dépassent largement des arêtes supérieures des capsules à filtrer (10).
